(19) Europäisches Patentamt
European Patent Office
Office européen des brevets

(11) Publication number: **0 321 208 B1**

# (12) EUROPEAN PATENT SPECIFICATION

(45) Date of publication of patent specification: **03.07.91 Bulletin 91/27**

(21) Application number: **88311823.4**

(22) Date of filing: **14.12.88**

(51) Int. Cl.[5]: **A01N 37/38**, A01N 37/34, A01N 37/18, A01N 37/16, A01N 37/14, A01N 35/02, A01N 31/04

## (54) Improvements in or relating to avian control.

The file contains technical information submitted after the application was filed and not included in this specification

(30) Priority: **14.12.87 GB 8729109**

(43) Date of publication of application: **21.06.89 Bulletin 89/25**

(45) Publication of the grant of the patent: **03.07.91 Bulletin 91/27**

(84) Designated Contracting States: **AT BE CH DE ES FR GB GR IT LI LU NL SE**

(56) References cited:
**US-A- 2 390 249**
**US-A- 2 967 128**
**J. ENVIRON. SCI. HEALTH, part A, vol. A18, no. 4, 1983, pages 493-502, Marcel Dekker, Inc.; E.W. SCHAFER Jr. et al.: "Repellency and toxicity of 55 insect repellents to red-winged blackbirds (Agelaius phoeniceus)**
**CHEMICAL PATENTS INDEX, BASIC ABSTRACTS JOURNAL, section C, week 8705, 1st April 1985, abstract no. 87-032874/05, Derwent Publications Ltd, London, GB; & JP-A-61 289 003 (MIKASA KAGAKU KOGYO K.K.) 19-12-1986**

(56) References cited:
**CHEMICAL ABSTRACTS, vol. 97, no. 6, 9th August 1982, page 336, abstract no. 44321n, Columbus, Ohio, US; & JP-A-82 46 915 (MAN-YU SEIYAKU K.K.) 17-03-1982**
**IL FARMACO - ED. SC., vol. 28, no. 3, 1973, pages 214-242, Farmaco, Davia, IT; G. PAGANI et al.: "Derivati cinnamici ad azione fitotossica. nota I"**
**IL FARMACO - ED. SC., vol. 28, no. 3, 1973, pages 230-242, Farmaco, Davia, IT; G. PAGANI et al.: "Derivati cinnamica ad attivita fitotossica. nota II"**

(73) Proprietor: **NATIONAL RESEARCH DEVELOPMENT CORPORATION**
**101 Newington Causeway**
**London SE1 6BU (GB)**

(72) Inventor: **Greig-Smith, Peter William**
**Woodland Cottage Furze Hill Road**
**Headley Bordon Hampshire GU35 8HA (GB)**
Inventor: **Wilson, Michael Frank**
**3 Wolsey Grove**
**Esher Surrey KT10 8NU (GB)**

(74) Representative: **Stephenson, Gerald Frederick**
**Patent Department National Research Development Corporation 101 Newington Causeway**
**London SE1 6BU (GB)**

**EP 0 321 208 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to the control of birds and in particular to compounds of use as avian repellents.

The protection of agricultural and horticultural crops from damage by pest birds is of considerable importance but there are very few means of adequately controlling birds in such situations without resorting to physical barriers or ineffective, inhumane or environmentally unacceptable chemicals. Attempts have therefore been made to identify compounds occuring naturally in flower buds which act as avian deterrents, many of which are phenolics of quite complex structure and/or high molecular weight whose action has often been attributed to the ability of tannins to precipitate proteins thereby conferring astringency on foods. However these attempts have not produced a suitable compound for use in the field.

The present invention has developed from an investigation of a group of relatively simple synthetic compounds, some of which contain phenolic groups and many of which do not, and which as far as we are aware have never been identified as occurring in flower buds. This investigation has led to the discovery of a range of compounds which exhibit varying levels of avian repellent activity.

Accordingly, the present invention comprises the use as an avian repellent of one or more compounds selected from (a) a compound of formula (I)

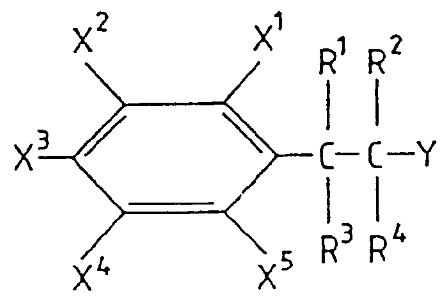

(I)

wherein $X^1$ and $X^5$ are each separately selected from hydrogen and $C_{1-4}$ alkyl, halogeno and halogeno-substituted $C_{1-4}$ alkyl groups ; $X^2$, $X^3$ and $X^4$ are each separately selected from hydrogen and $C_{1-4}$ alkyl, hydroxy, $C_{1-4}$ alkoxy and phenoxy groups ; $R^1$ and $R^2$ are each separately selected from hydrogen and $C_{1-4}$ alkyl groups; $R^3$ and $R^4$ are each hydrogen or together constitute the second bond of a carbon-carbon double bond joining $-CR^1R^3-$ and $-CR^2R^4-$ ; and Y is carbamoyl or carbamoyl N-substituted by one or two of the same or different $C_{1-4}$ alkyl groups, and (b) a compound being 3,5-dimethoxycinnamic acid or a carboxylic ester or carboxylate salt thereof.

It will be appreciated that 3,5-dimethoxycinnamic acid has the formula (I) in which $X^1$, $X^3$ and $X^5$ are each hydrogen, $X^2$ and $X^4$ are each methoxy, $R^1$ and $R^2$ are each hydrogen, $R^3$ and $R^4$ together constitute the second bond of a carbon-carbon double bond and Y is carboxy.

The compounds of use in this invention may exist in various stereoisomeric forms but in the case of the compounds (I) in which $R^3$ and $R^4$ represent the second bond of a carbon-carbon double bond, i.e. cinnamamide and its derivatives, and of 3,5-dimethoxycinnamic acid and its derivatives, the preference is for the commonly occurring trans isomeric form rather than the cis isomeric form.

General preferences among the compounds of formula (I) are as follows. $X^1$ and $X^5$ are conveniently each separately selected from hydrogen or to a lesser extent from $C_{1-4}$ alkyl, or alternatively from a halogeno group such as fluoro, chloro, bromo or iodo, or to a lesser extent additionally from a halogeno-substituted methyl group, for example trifluoromethyl. $X^2$, $X^3$ and $X^4$ are conveniently each separately selected from hydrogen and $C_{1-4}$ alkoxy groups, especially ethoxy and particularly methoxy, or to a lesser extent additionally from phenoxy and also hydroxy. As regards $R^1$ and $R^2$ these are preferably each separately selected from hydrogen, methyl and ethyl, especially from methyl and particularly from hydrogen. Conveniently each of $R^1$ and $R^2$ is hydrogen or one is hydrogen, preferably $R^2$, and the other is a $C_{1-4}$ alkyl group, preferably methyl. $R^3$ and $R^4$ preferably together constitute the second bond of a double bond. As regards the N-substituted carbamoyl groups Y, these are preferably substituted by one $C_{1-4}$ alkyl group, for example ethyl or particularly methyl, but an unsubstituted carbamoyl group is preferred.

Esters of 3,5-dimethoxycinnamic acid may conveniently be formed with aliphatic or aromatic alcohols, particularly those containing a $C_1$-$C_{24}$ aliphatic hydrocarbon group, for example an alkyl or alkenyl group, or an aromatic hydrocarbon group such as an unsubstituted or substituted napthyl or particularly phenyl group, whilst salts may be formed with various organic or inorganic bases, for example an alkali metal hydroxide such as sodium hydroxide, a quaternary ammonium hydroxide or an amine such as 2-amino-2-hydroxymethyl propane

1,3-diol (tris). The use of such derivatives, which are conveniently of physiologically acceptable form, may be of value in formulation. Thus esters containing the larger aliphatic hydrocarbon groups will be less water soluble than the free acid and many salts will be more water soluble.

Compounds of some particular interest have $X^2$ and $X^4$ which are each separately a $C_{1-4}$ alkoxy group, for example an ethoxy or especially a methoxy group, conveniently together with groups $X^1$, $X^3$ and $X^5$ in which $X^1$ and $X^5$ are each hydrogen and $X^3$ is $C_{1-4}$ alkoxy, for example ethoxy or especially methoxy, or preferably which are each hydrogen. Alternatively, other compounds of particular interest have $X^1$, $X^2$, $X^3$, $X^4$ and $X^5$ which are each hydrogen. Such compounds of particular interest may conveniently have $R^3$ and $R^4$ which constitute a second bond of a carbon-carbon double bond, particularly together with $R^1$ and $R^2$ which are each hydrogen; Y preferably being a carbamoyl group. 3,5-Dimethoxycinnamic acid itself is preferred to its esters and salts.

Examples of specific compounds of use in the present invention are

(1) 3,5-dimethoxycinnamic acid and its carboxylic esters and carboxylate salts ;

(2) 3,5-dimethoxycinnamamide ;

(3) 3,4,5-trimethoxycinnamamide ; and

(4) cinnamamide.

Of these compounds (1), (2) and (4) are of most interest with (1) and especially (4) being preferred for use as an avian repellent.

The present invention relating to the use of the compounds as defined hereinbefore as avian repellents is not limited by any theory as to the mode of action of the repellents. It is possible, however, that the particular effectiveness of the compounds as avian repellents might be related to their ability to inhibit the biochemical process of enzymatic proteolysis which takes place in the small intestine of the bird.

The inhibition reduces the nutritional quality of foodstuffs ingested by the bird and in turn discourages it from further feeding on a treated crop. On the other hand, it will be appreciated that the compounds will exert an effect at two levels, a first effect which depends simply on their distasteful nature and a second effect which depends on their effect on the bird's digestion, and it seems more likely that the first effect is the one which predominates.

Methods for synthesising both the compounds of use in the present invention and intermediates for the preparition of those compounds will be readily apparent to the man skilled in the art. Thus they may be synthesised by procedures described in the art for the same compounds or analogues thereof, by modifications of the procedures, or by procedures described for related compounds or modifications thereof. In particular, cinnamic acid and ring substituted derivatives thereof such as 3,5-dimethoxycinnamic acid may conveniently be prepared by a Perkin reaction from benzaldehyde on the appropriate substituted benzaldehyde, for example using acetic acid and anhydrous sodium or potassium acetate. Compounds in which the carboxy group of cinnamic acid is modified such as the compounds of formual (I) may be prepared from the corresponding cinnamic acid with any necessary protection of ring substituents during the process. Thus cinnamamide may conveniently be prepared by the reaction of cinnamoyl chloride (which can be prepared from cinnamic acid by reaction with thionyl chloride, phosphorus trichloride or phosphorus pentachloride) with ammonia or by forming the ammonium salt of cinnamic acid by reaction with ammonia and then heating this to give cinnamamide, ring substituted cinnamamides (I) being prepared by the use of a substituted cinnamic acid and N-substituted cinnamamides (I) by the use of an appropriate amine in place of ammonia.

The compound $\alpha,\beta$-dihydrocinnamic acid is obtainable by the hydrogenation of the carbon-carbon double bond of cinnamic acid, for example in the presence of a nickel catalyst, ring substituted derivatives being prepared similarly with protection of the substituents where necessary. Compounds (I) in which each of $R^1$, $R^2$, $R^3$ and $R^4$ is hydrogen may either be prepared from the corresponding saturated compound in the same way or by modification of the carboxy group of the corresponding $\alpha,\beta$-dihydrocinnamic acid.

Feeding trials have been conducted with both Japanese quail and feral pigeons using cinnamamide, cinnamic acid, 3,5-dimethoxycinnamic acid and, by way of comparison, using various other substituted cinnamic acids. The deterrent effect on food consumption was found to be most marked with 3,5-dimethoxycinnamic acid and especially with cinnamamide. In particular, cinnamamide was tested in both quail and pigeons when a deterrent effect on food consumption was noted in both species.

The subsequent discussion of the use of the compounds defined hereinbefore as avian repellents refers particularly to the compounds of formula (I) as defined hereinbefore but it will be appreciated that it applies equally to 3,5-dimethoxycinnamic acid and its esters and salts.

The compounds (I) are of interest in repelling a wide variety of birds, although they are of particular interest in the case of some birds which present particular problems such as pigeons and bullfinches, and also starlings and sparrows, as well as geese, for example the Brent goose or the Canada goose (Branta canadensis), the red-winged blackbird (Agelius phoeniceus) and the brown-headed cowbird (Molothrus ater) particularly in the USA, weaver birds, for example Quelea quelea, particularly in Africa, and the Indian house crow particularly

in India and Africa.

A particular area of use of the compounds is in a horticultural context for the avoidance of damage to developing buds, particularly during the dormant season, especially fruit buds, for example of the top fruits apples, pears, plums, etc., to developing top fruit, particularly cherries, and to formed soft fruit prior to harvest, for example raspberries, strawberries, loganberries, blackberries, blackcurrants, gooseberries, etc. Other applications include protection of the seeds of growing crops, particularly sunflowers and oil seed rape. It will be appreciated, therefore, that the compounds (I) may be used for the protection of any plant material and that this may be in embryo, growing or harvested form, including the forms of seeds, seedlings, buds, leaves and other vegetative parts, and fruit. The compounds (I) are also of potential interest in any context where it is desirable to prevent bird damage, for example in the protection of structures and particularly electric cables from pecking by birds.

The present invention thus includes a method which comprises treating a plant material which is on embryo, growing or harvested, crop with (a) a compound of formula (I) as defined hereinbefore and/or with (b) 3,5-dimethoxycinnamic acid or a carboxylic ester or carboxylate salt thereof. The invention further extends to such plant material, for example fruit and seeds, when so treated.

The compounds (I) may be formulated for application with various suitable types of diluent or carrier, particularly for agricultural/horticultural purposes, including aqueous formulations, oily formulations, etc. One suitable type of formulation involves the use of aqueous acetone as a diluent, especially with a higher proportion of water than acetone, such as 60-90% water : 40-10% acetone (by volume), for example 80% water 20% acetone (by volume). However a variety of alternative diluents or carriers which are acceptable for application onto crops may conveniently be used to provide a solution, suspension, emulsion or powder containing the compound (I). In producing more complex forms of composition the aim is to enhance the activity of the compound through presenting it in a more effective physical form whilst avoiding any masking of the repellent effect by the mode of formulation. Of particular interest are slow release compositions which produce a more prolonged effect from a single application of the compound, the amount of the compound being maintained at an appropriate level through balancing the breakdown of the compound already released with the release of further amounts of the compound. Various conventional types of slow release formulation are suitable for this purpose but micro-encapsulation is of particular interest, for example in a polyurea capsule. In the case of compositions for treating harvested seeds solid carriers, for example one of various clays such as kaolin and bentonite, may conveniently be used to provide powder formulations, together with an emulsifying agent where appropriate.

Various other components may be included with the compounds (I) in a composition of use in the present invention. These include emulsifying agents for enhancing both the preparation of the composition and its application to the plant or other material. Suitable emulsifying agents are particularly the non-ionic surface active agents and especially those based on a polyether structure, for example polyoxyethylene stearate and nonylphenylpolyoxyethanol. Other types of additional component which may be considered for inclusion in the composition include various colouring agents, for example Sky Blue and other commercially available food colourings, since birds are repelled by unfamiliar or aversive visual clues, agents which enhance adhesion of the composition to the material substance to which it is applied, for example the commercially available materials Rhoplex AC-33, Trition AE and Acronal 4D (BASF), as well as insecticide, fungicides, etc., as appropriate. It will also be appreciated that the composition may contain more than one compound of use in the invention, since this is often a more convenient approach than applying two such compounds separately.

Treatment will be applied at an appropriate time, for example either in advance or in response to bird attack. For the protection of fruit buds such treatment is commonly applied during the dormant season, i.e. the late autumn, winter and early spring, for example from November to February in the United Kingdom. The application of the composition containing the compounds (I) may conveniently be effected by standard means, and often by spraying, for example by the use of drum sprayers in orchards and may be repeated as necessary to maintain the desired level of control. Further general information concerning the formulation and use of avian repellents is provided by data on the use of existing repellents such as anthraquinone, thiram, aluminium ammonium sulphate, quassia extract and particularly methiocarb outside the United Kingdom.

The rate of application of the compounds will depend both upon the particular compound (I) which is being used and upon the nature and location of the substance being treated. However, by way of guidance it may be stated that for the treatment of growing crops an application rate of 0.1 to 100, particularly 1 to 10 kilograms per hectare, of the compound (I) is often appropriate, the aim being to use the minimum effective quantity which may, for example, be 5 kilograms per hectare or a lesser amount as indicated. For the treatment of harvested crops, for example seeds, an application rate of 0.01 to 1, particularly 0.05 to 0.5% w/w, of the compound (I) to treated material is often appropriate. Once again, the aim is to use the minimum effective quantity which may, for example, be 0.1% w/w or a lesser amount as indicated.

The invention is illustrated by the following Examples.

EXAMPLES

The feeding trials described in Examples 1 and 2 describe test not only on the compounds of use in the present invention but, by way of comparison, on other related compounds. The cinnamamide and the cinnamic acid and derivatives thereof which were used were predominantly of the trans isomeric form.

Example 1 : Feeding trials with Japanese quail

(A) Six week old female Japanese quail were preconditoned by weighing them seven days before the start of the feeding trial. Five quail were placed in each of four cages and each cage was provided with a different diet, these being (a) a control diet of standard turkey starter crumbs (TSC), (b) TSC treated with 5,000 ppm cinnamamide, (c) TSC treated with 5,000 ppm 4-hydroxy-3,5-dimethoxycinnamic acid, and (d) TSC treated with 2,500 ppm cinnamamide + 2,500 ppm 4-hydroxy-3,5-dimethoxycinnamic acid. The treated TSC was prepared in each case by dissolving/ suspending the compound or compounds in diethyl ether (1500 ml) and mixing this with TSC (2000 g) at 0.25% or 0.5% w/w concentration compound/TSC in an industrial food mixer for 1 hour to evaporate off the diethyl ether and produce a homogeneous mixture. The control was prepared by mixing TSC (2000 g) with diethyl ether for 1 hour in an industrial food mixer. The amount of each diet consumed and the weight gain of the birds was recorded on a daily basis for a period of 14 days. The trial was carried out in duplicate.

The results of the trial are presented in Table 1, together with the standard deviation. It will be seen that diet (b) produced both a decreased increase in body weight and a reduction in food consumption as compared with the control diet (a).

(B) In a variation of the treatment described in (A) four quail were placed in each of four cages and each cage was offered a choice between a control diet of TSC and TSC treated with one of (a) 5,000 ppm cinnamamide, (b) 2,500 ppm cinnamamide, (c) 1,000 ppm cinnamamide, and (d) 2,500 ppm cinnamamide + 2,500 ppm 4-hydroxy-3,5-dimethoxycinnamic acid. The various diets were prepared as described under (A).

The results of the trial are presented in Table 2, together which the standard deviation. It will be seen that in each case the birds consumed less treated than untreated food and that the weight gain was the least for the birds offered the 5,000 ppm cinnamamide diets but that the 2,500 ppm cinnamamide + 2,500 ppm 4-hydroxy-3,5-dimethoxycinnamic acid diet was least consumed.

Table 1 : No choice feeding trials

| Diet | Concentration of additive (ppm) | Increase in body weight (g/bird/day) | Average food eaten (g/bird/day) |
|---|---|---|---|
| Control | - | 0.66 ± 0.10 | 19 ± 0.3 |
| Cinnamamide | 5,000 | 0.14 ± 0.04 | 17 ± 0.3 |
| 4-Hydroxy-3,5-dimethoxycinnamic acid | 5,000 | 0.89 ± 0.10 | 21 ± 0.3 |
| Cinnamamide + 4-hydroxy-3,5-dimethoxycinnamic acid | 2,500 each | 0.36 ± 0.10 | 21 ± 0.2 |

Table 2 : Feeding trials with choice

| Diet | Concentration of additive (ppm) | Increase in body weight (g/bird/day) | Average food eaten (g/bird/day) |
|---|---|---|---|
| Control<br>Cinnamamide | -<br>5,000 | 0.66 ± 0.10 | 12 ± 0.5<br>4 ± 0.2 |
| Control<br>Cinnamamide | -<br>2,500 | 1.34 ± 0.20 | 15 ± 0.4<br>5 ± 0.4 |
| Control<br>Cinnamamide | -<br>1,000 | 1.29 ± 0.10 | 11 ± 0.2<br>6 ± 0.2 |
| Control<br>Cinnamamide + 4-Hydroxy-3,5-dimethoxycinnamic acid | -<br>2,500 each | 1.35 ± 0.2 | 15 ± 0.3<br>3 ± 0.2 |

Example 2 : Feeding trials with feral pigeons

Feral pigeons were transferred from a communal outdoor aviary to individual cages and maintained on a 10 hour light – 14 hour dark cycle. Birds were gradually weaned away from their normal diet of maize, wheat and maple peas to a standard laboratory diet of turkey starter pellets. All birds lost weight during the first few days as they adjusted to their new conditions. Most began to regain weight after 3 or 4 days. Some birds could not adapt, continued to lose weight and were removed from the experiment. After about two to three weeks the bird weights were more or less stable and the trials were commenced.

The birds were tested with cinnamamide, 3,5-dimethoxycinnamic acid and a range of related compounds, and also with sucrose octaacetate and dimethyl anthranilate which are known to be offensive to birds. The compounds for testing were each dissolved in an 80/20 v/v acetone/water mixture and sprayed onto turkey starter pellets to give a 0.5% w/w compound/pellet concentration. The pellets were oven dried and then left to absorb atmospheric moisture. The control food was sprayed with the same volume of acetone/water mixture.

A group of 35 feral pigeons was caged individually for the trials which used eight compounds together with sucrose octaacetate and dimethyl anthranilate. Each bird was subjected to treatment with each compound in a random order subject to the limitation of a latin square design. Each treatment was presented to the birds in no-choice and two-choice conditions. The no-choice phase lasted 3 days, during which a bird was presented with a single bowl containing 120 g of treated food. Each bird was weighed before and after the no-choice phase, as was the amount of food remaining. There immediately followed a two-choice phase in which the birds could choose between food treated with a given chemical and a bowl containing otherwise identical pellets without the chemical (the control treatment utilising two bowls of acetone/water treated pellets, one of which was arbitrarily selected as the control). The two-choice phase lasted four days during which food consumption was monitored daily. The position of the food bowls was alternated each day in order to overcome the confusing of food preference with position preference and ample water and grit were supplied throughout the trial.

The data obtained in the three day no-choice test is presented in Table 3 for both mean consumption of treated food in grams during the test and for mean weight difference in grams after the test as compared with before the test, the standard deviation being given after each figure. It will be seen that the most marked reduction in consumption as compared with the control and in mean weight difference occurs with 3,5-dimethoxycinnamic acid and most particularly with cinnamamide, the difference being greater than that observed with sucrose octaacetate or dimethyl anthranilate.

Table 3 : No-choice test

| Compound | Mean consumption grams | Mean weight difference grams |
| --- | --- | --- |
| Control | 59.8 ± 2.4 | 1.7 ± 0.8 |
| Cinnamic acid | 60.4 ± 3.1 | 2.4 ± 1.1 |
| Cinnamamide | 22.3 ± 2.7 | -16.2 ± 1.3 |
| 3,4-Dihydroxycinnamic acid | 63.3 ± 3.0 | 2.3 ± 1.1 |
| 3,4-Dimethoxycinnamic acid | 55.3 ± 2.3 | -1.1 ± 0.9 |
| 3,5-Dimethoxycinnamic acid | 33.1 ± 1.5 | -12.9 ± 1.2 |
| 4-Hydroxy-3-methoxy-cinnamic acid | 54.5 ± 2.9 | -0.2 ± 1.1 |
| 3,4,5-Trimethoxy-cinnamic acid | 53.0 ± 2.1 | -1.5 ± 0.9 |
| 4-Hydroxy-3,5-dimethoxycinnamic acid | 60.2 ± 3.3 | 2.3 ± 0.9 |
| Sucrose octaacetate | 54.0 ± 2.6 | 2.3 ± 0.9 |
| Dimethyl anthranilate | 45.9 ± 2.9 | -4.8 ± 2.0 |

The data obtained in the four day tow-choice test is presented in Table 4 for mean consumption of treated food. It can be seen that in agreement with the results of the no-choice tests it is the3,5-dimethoxycinnamic acid and particularly the cinnamamide treated food which is consumed least and particularly at a lower level than sucrose octaacetate dimethyl anthranilate.

Table 4 : Two-choice test

| Compound | Mean consumption of treated food grams |
|---|---|
| (1) Control | 42.3 ± 2.8 |
| (2) Cinnamic acid | 25.2 ± 2.9 |
| (3) Cinnamamide | 6.0 ± 1.5 |
| (4) 3,4-Dihydroxycinnamic acid | 31.1 ± 3.4 |
| (5) 3,4-Dimethoxycinnamic acid | 27.1 ± 2.8 |
| (6) 3,5-Dimethoxycinnamic acid | 12.1 ± 1.7 |
| (7) 4-Hydroxy-3-methoxy-cinnamic acid | 22.7 ± 2.4 |
| (8) 3,4,5-Trimethoxycinnamic acid | 19.8 ± 2.7 |
| (9) 4-Hydroxy-3,5-dimethoxy-cinnamic acid | 29.2 ± 2.8 |
| (10) Sucrose octaacetate | 28.6 ± 2.4 |
| (11) Dimethyl anthranilate | 18.2 ± 2.4 |

The data is alos presented as a histogram in the accompanying Figure, the compounds being referenced as in Table 4, from which it will be seen that it is cinnamamide and 3,5-dimethoxycinnamic acid which produce a makes repellent effect as shown by the decreased consumption of food as compared with the acetone/water-treated food of the control experiment.

## Claims

1. The use as an avian repellent of one or more compounds selected from (a) a compound of formula (I)

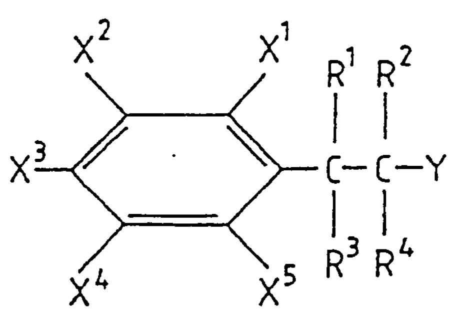

(I)

wherein $X^1$ and $X^5$ are each separately selected from hydrogen and $C_{1-4}$ alkyl, halogeno and halogeno-substituted $C_{1-4}$ alkyl groups ; $X^2$, $X^3$ and $X^4$ are each separately selected from hydrogen and $C_{1-4}$ alkyl, hydroxy, $C_{1-4}$ alkoxy and phenoxy groups ; $R^1$ and $R^2$ are each separately selected from hydrogen and $C_{1-4}$ alkyl groups; $R^3$ and $R^4$ are each hydrogen or together constitute the second bond of a carbon-carbon double bond joining

$-CR^1R^3-$ and $-CR^2R^4-$ ; and Y is carbamoyl or carbamoyl N-substituted by one or two of the same or different $C_{1-4}$ alkyl groups, and (b) a compound being 3,5-dimethoxycinnamic acid or a carboxylic ester or carboxylate salt thereof.

2. The use as an avian repellent of a compound of formula (I) as defined in Claim 1.

3. The use as an avian repellent of the compound 3,5-dimethoxycinnamic acid.

4. The use according to Claim 1 or 2, in which $X^1$ and $X^5$ are each separately selected from hydrogen and $C_{1-4}$ alkyl.

5. The use according to Claim 1, 2 or 4, in which $X^2$, $X^3$ and $X^4$ are each separately selected from hydrogen, $C_{1-4}$ alkyl and $C_{1-4}$ alkoxy groups.

6. The use according to Claim 1, 2, 4 or 5, in which $R^1$ and $R^2$ are each hydrogen and $R^3$ and $R^4$ together constitute the second bond of a carbon-carbon double bond.

7. The use according to any of Claims 1, 2 and 4 to 6, in which Y is carbamoyl.

8. The use as an avian repellent of a compound of formula (II)

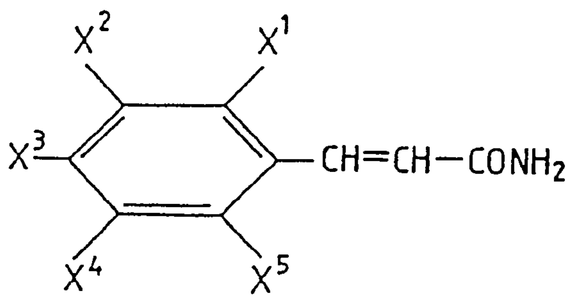

(II)

wherein $X^1$ and $X^5$ are each separately selected from hydrogen and $C_{1-4}$ alkyl groups ; and $X^2$, $X^3$ and $X^4$ are each separately selected from hydrogen and $C_{1-4}$ alkyl, hydroxy and $C_{1-4}$ alkoxy groups.

9. The use according to any of Claims 1, 2 and 4 to 8, in which $X^1$ and $X^5$ are each hydrogen.

10. The use according to any of Claims 1, 2 and 4 to 9, in which $X^2$ and $X^4$ are each separately a $C_{1-4}$ alkoxy group.

11. The use according to Claim 10, in which $X^2$ and $X^4$ are each methoxy.

12. The use according to Claim 11, in which the compound is 3,5-dimethoxycinnamamide.

13. The use as an avian repellent of the compound cinnamamide.

14. The use together as an avian repellent of two or more of

(a) 3,5-dimethoxycinnamic acid and its carboxylate salts and carboxylic esters,

(b) 3,5-dimethoxycinnamamide,

(c) 3,4,5-trimethoxycinnamamide, and

(d) cinnamamide.

15. The use according to any of Claims 1 to 14, in which the compound is used together with a colouring agent.

16. A method which comprises treating a plant material which is an embryo, growing or harvested crop with one or more compounds selected from (a) a compound of formula (I)

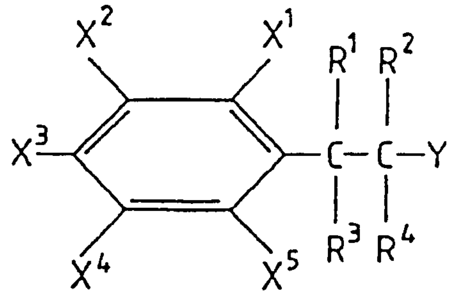

(I)

wherein $X^1$ and $X^5$ are each separately selected from hydrogen and $C_{1-4}$ alkyl groups ; $X^2$, $X^3$ and $X^4$ are each separately selected from hydrogen and $C_{1-4}$ alkyl, hydroxy, $C_{1-4}$ alkoxy and phenoxy groups ; $R^1$ and $R^2$ are each separately selected from hydrogen and $C_{1-4}$ alkyl groups ; $R^3$ and $R^4$ are each hydrogen or together constitute the second bond of a carbon-carbon double bond joining $-CR^1R^3-$ and $-CR^2R^4-$ ; and Y is carbamoyl

or carbamoyl N-substituted by one or two of the same or different $C_{1-4}$ alkyl groups, and (b) a compound being 3,5-dimethoxycinnamic acid or a carboxylic ester or carboxylate salt thereof.

17. A method of controlling bird damage which comprises exposing to birds plant material which is an embryo, growing or harvested crop, said material having been treated with one or more compounds selected from (a) a compound of formula (I)

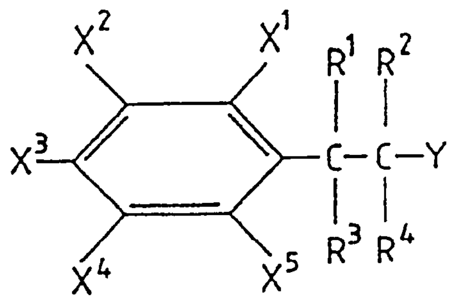

(I)

wherein $X^1$ and $X^5$ are each separately selected from hydrogen and $C_{1-4}$ alkyl groups ; $X^2$, $X^3$ and $X^4$ are each separately selected from hydrogen and $C_{1-4}$ alkyl, hydroxy, $C_{1-4}$ alkoxy and phenoxy groups ; $R^1$ and $R^2$ are each separately selected from hydrogen and $C_{1-4}$ alkyl groups ; $R^3$ and $R^4$ are each hydrogen or together constitute the second bond of a carbon-carbon double bond joining $-CR^1R^3-$ and $-CR^2R^4-$ ; and Y is carbamoyl or carbamoyl N-substituted by one or two of the same or different $C_{1-4}$ alkyl groups, and (b) a compound being 3,5-dimethoxycinnamic acid or a carboxylic ester or carboxylate salt thereof.

18. A method according to Claim 16 or 17 which uses a compound as defined in any of Claims 2 to 14.

19. The use according to any of Claims 1 to 15, which is use to repel birds from a plant material which is an embryo, growing or harvested crop.

20. A method according to Claim 16, 17 or 18 or the use according to Claim 19, in which the plant material is fruit.

21. A method according to Claim 16, 17 or 18 or the use according to Claim 19, in which the plant material is seeds.

22. The use according to any of Claims 1 to 15 and 19 to 21 or a method according to any of Claims 16 to 18, 20 and 21, in which the birds are pigeons, bullfinches, starlings or sparrows.

23. The use or a method according to Claim 22, in which the birds are pigeons.

24. A composition comprising 3,5-dimethoxycinnamic acid or a carboxylate salt or carboxylic ester thereof together with a colouring agent.

25. A composition comprising a compound of formula (II)

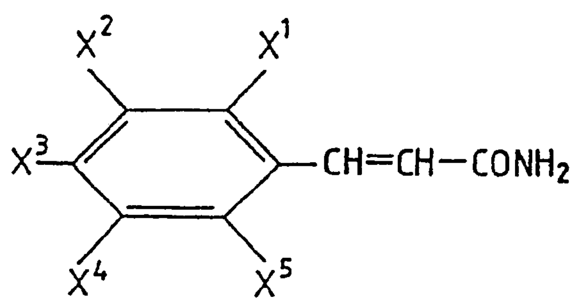

(II)

wherein $X^1$ and $X^5$ are each separately selected from hydrogen and $C_{1-4}$ alkyl ; and $X^2$, $X^3$ and $X^4$ are each separately selected from hydrogen and $C_{1-4}$ alkyl, hydroxy and $C_{1-4}$ alkoxy groups, but excluding cinnamamide, together with a colouring agent.

26. A composition according to Claim 25, in which the compound of formula (II) is as defined in any of Claims 9 to 12.

27. An avian repellent composition containing more than one compound selected from

(a) 3,5-dimethoxycinnamic acid and its carboxylate salts and carboxylic esters,

(b) 3,5-dimethoxycinnamamide,

(c) 3,4,5-trimethoxycinnamamide and

(d) cinnamamide.

28. An avian repellent composition containing more than one compound selected from (a) 3,5-dimethoxycinnamamide, (b) 3,4,5-trimethoxycinnamamide and (c) cinnamamide.

## Ansprüche

1. Die Verwendung als Vogelabwehrmittel bzw. Vogelrepellens von einer oder mehreren Verbindungen, ausgewählt unter

(a) einer Verbindung der Formel (I)

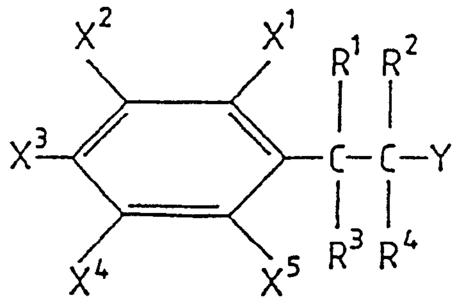

(I)

worin $X^1$ und $X^5$ je getrennt ausgewählt werden unter Wasserstoff und $C_{1-4}$-Alkyl, Halogen und Halogen-substituierten $C_{1-4}$-Alkylgruppen, $X^2$, $X^3$ und $X^4$ getrennt ausgewählt werden unter Wasserstoff und $C_{1-4}$-Alkyl-, Hydroxy-, $C_{1-4}$-Alkoxy- und Phenoxygruppen ; $R^1$ und $R^2$ je getrennt ausgewählt werden unter Wasserstoff und $C_{1-4}$-Alkylgruppen ; $R^3$ und $R^4$ je Wasserstoff bedeuten oder zusammen die zweite Bindung einer Kohlenstoff-Kohlenstoff-Doppelbindung ergeben, die $-CR^1R^3-$ und $-CR^2R^4-$ verbindet ; und Y Carbamoyl oder Carbamoyl-N-substituiert durch eine oder zwei gleiche oder unterschiedliche $C_{1-4}$-Alkylgruppen bedeutet und (b) einer Verbindung, die 3,5-Dimethoxyzimtsäure oder ein Carbonsäureester oder Carboxylatsalz davon ist.

2. Die Verwendung eines Vogelabwehrmittels bzw. Vogelrepellens einer Verbindung der Formel (I) nach Anspruch 1.

3. Die Verwendung als Vogelabwehrmittel bzw. Vogelrepellens der Verbindung 3,5-Dimethoxyzimtsäure.

4. Die Verwendung nach einem der Ansprüche 1 oder 2, wobei $X^1$ und $X^5$ je getrennt ausgewählt werden unter Wasserstoff und $C_{1-4}$-Alkyl.

5. Die Verwendung nach einem der Ansprüche 1, 2 oder 4, wobei $X^2$, $X^3$ und $X^4$ getrennt ausgewählt werden unter Wasserstoff, $C_{1-4}$-Alkyl- und $C_{1-4}$-Alkoxygruppen.

6. Die Verwendung nach einem der Ansprüche 1, 2, 4 oder 5, wobei $R^1$ und $R^2$ je Wasserstoff bedeuten und $R^3$ und $R^4$ zusammen die zweite Bindung einer Kohlenstoff-Kohlenstoff-Doppelbindung bedeuten.

7. Die Verwendung nach einem der Ansprüche 1, 2 und 4 bis 6, wobei Y Carbamoyl bedeutet.

8. Die Verwendung als Vogelabwehrmittel bzw. Vogelrepellens einer Verbindung der Formel (II)

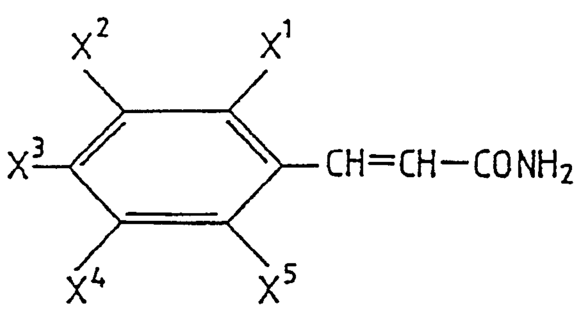

(II)

worin $X^1$ und $X^2$ getrennt ausgewählt werden unter Wasserstoff und $C_{1-4}$-Alkylgruppen ; und $X^2$, $X^3$ und $X^4$ getrennt ausgewählt werden unter Wasserstoff und $C_{1-4}$-Alkyl-, Hydroxy-, $C_{1-4}$-Alkoxygruppen.

9. Die Verwendung nach einem der Ansprüche 1, 2 und 4 bis 8, wobei $X^1$ und $X^5$ je Wasserstoff bedeuten.

10. Die Verwendung nach einem der Ansprüche 1, 2 und 4 bis 9, wobei $X^2$ und $X^3$ getrennt eine $C_{1-4}$-Alkoxypruppe bedeuten.

11. Die Verwendung nach Anspruch 10, wobei $X^2$ und $X^4$ je Methoxy bedeuten.

12. Die Verwendung nach Anspruch 11, wobei die Verbindung 3,5-Dimethoxyzimtsäureamid ist.

13. Die Verwendung als Vogelabwehrmittel bzw. Vogelrepellens, wobei die Verbindung ein Zimtsäureamid ist.

14. Die gemeinsame Verwendung als Vogelabwehrmittel bzw. Vogelrepellens von zwei oder mehreren
(a) 3,5-Dimethoxyzimtsäure und ihre Carboxylatsalze und Carbonsäureester,
(b) 3,5-Dimethoxyzimtsäureamid,
(c) 3,4,5-Trimethoxyzimtsäureamid und
(d) Zimtsäureamid.

15. Die Verwendung nach einem der Ansprüche 1 bis 14, wobei die Verbindung zusammen mit einem Farbstoff verwendet wird.

16. Verfahren, dadurch **gekennzeichnet**, daß ein Pflanzenmaterial, welches ein Embryo, eine wachsende oder geerntete Nutzpflanze bzw. ein Enteertrag ist, mit einer oder mehreren Verbindungen, ausgewählt unter
(a) einer Verbindung der Formel (I)

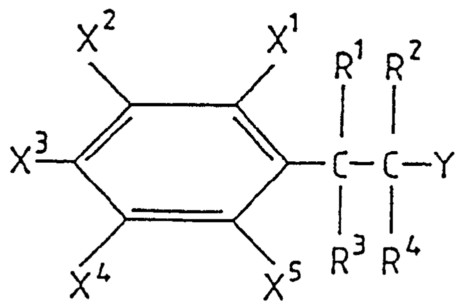

(I)

worin $X^1$ und $X^5$ je getrennt ausgewählt werden unter Wasserstoff und $C_{1-4}$-Alkylpruppen ; $X^2$, $X^3$ und $X^4$ getrennt ausgewählt werden unter Wasserstoff und $C_{1-4}$-Alkyl-, Hydroxy-, $C_{1-4}$-Alkoxy- und Phenoxypruppen; $R^1$ und $R^2$ je getrennt ausgewählt werden unter Wasserstoff und $C_{1-4}$-Alkylgruppen ; $R^3$ und $R^5$ je Wasserstoff bedeuten oder zusammen die zweite Bindung einer Kohlenstoff-Kohlenstoff-Doppelbindung, welche $-CR^1R^3-$ und $-CR^2R^4-$ verbindet, darstellen ; und Y Carbamoyl oder Carbamoyl-N-substituiert durch eine oder zwei gleiche oder unterschiedliche $C_{1-4}$-Alkylgruppen bedeutet ; und
(b) einer Verbindung, die 3,5-Dimethoxyzimtsäure oder ein Carbonsäureester oder Carboxylatsalz davon ist, behandelt wird.

17. Verfahren zur Kontrolle von durch Vögel verursachte Schäden, dadurch **gekennzeichnet**, daß das Pflanzenmaterial, das den Vögeln ausgesetzt ist und ein Embryo, eine wachsende oder geerntete Nutzpflanze bzw. ein Ernteertrag ist, mit einer oder mehreren Verbindungen, ausgewählt unter
(a) einer Verbindung der Formel (I)

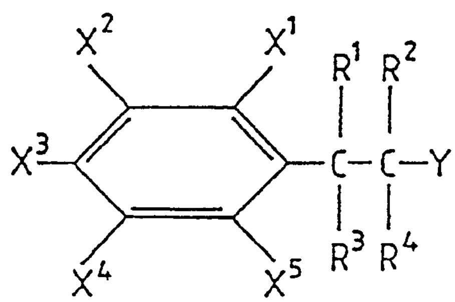

(I)

worin $X^1$ und $X^5$ je getrennt ausgewählt werden unter Wasserstoff und $C_{1-4}$-Alkylgruppen ; $X^2$, $X^3$ und $X^4$ getrennt ausgewählt werden unter Wasserstoff und $C_{1-4}$-Alkyl-, Hydroxy-, $C_{1-4}$-Alkoxy- und Phenoxygruppen; $R^1$ und $R^2$ je getrennt ausgewählt werden unter Wasserstoff und $C_{1-4}$-Alkylgruppen ; $R^3$ und $R^4$ je Wasserstoff bedeuten oder zusammen die zweite Bindung einer Kohlenstoff-Kohlenstoff-Doppelbindung, welche $-CR^1R^3-$ und $-CR^2R^4-$ verbindet, darstellen ; und Y Carbamoyl oder Carbamoyl-N-substituiert durch eine oder zwei gleiche oder unterschiedliche $C_{1-4}$-Alkylkruppen bedeutet ; und
(b) einer Verbindung, die 3,5-Dimethoxyzimtsäure oder ein Carbonsäureester oder Carboxylatsalz davon ist ; behandelt wird.

18. Verfahren nach Anspruch 16 oder 17, dadurch **gekennzeichnet**, daß eine Verbindung verwendet wird, wie sie in einem der Ansprüche 2 bis 14 definiert wurde.

19. Verwendung nach einem der Ansprüche 1 bis 15, dadurch **gekennzeichnet**, daß die Verwendung erfolgt, um Vögel von einem Pflanzenmaterial abzuwehren, welches ein Embryo, eine wachsende oder geerntete Nutzpflanze bzw. ein Ernteertrag ist.

20. Verfahren nach einem der Ansprüche 16, 17 oder 18 oder die Verwendung nach Anspruch 19, dadurch **gekennzeichnet**, daß das Pflanzenmaterial eine Frucht ist.

21. Verfahren nach einem der Ansprüche 16, 17 oder 18 oder die Verwendung nach Anspruch 19, dadurch **gekennzeichnet**, daß das Pflanzenmaterial Samen ist.

22. Die Verwendung nach einem der Ansprüche 1 bis 15 und 19 bis 21 oder ein Verfahren nach einem der Ansprüche 16 bis 18, 20 und 21, dadurch **gekennzeichnet**, daß die Vögel Tauben, Dompfaffen, Stare oder Spatzen sind.

23. Die Verwendung oder ein Verfahren nach Anspruch 22, dadurch **gekennzeichnet**, daß die Vögel Tauben sind.

24. Mittel, dadurch **gekennzeichnet**, daß es 3,5-Dimethoxyzimtsäure oder ein Carboxylatsalz oder ein Carbonsäureester davon zusammen mit einem Farbstoff enthält.

25. Mittel, dadurch **gekennzeichnet**, daß es eine Verbindung der Formel (II)

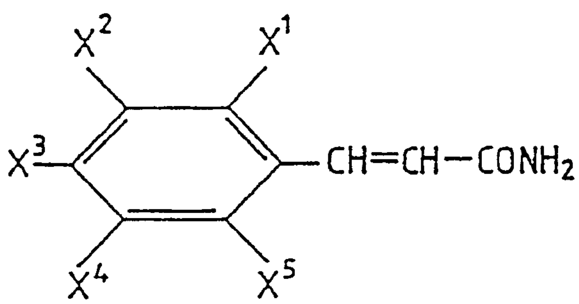

(II)

worin $X^1$ und $X^5$ je getrennt ausgewählt werden unter Wasserstoff und $C_{1-4}$-Alkyl ; und $X^2$, $X^3$ und $X^4$ je getrennt ausgewählt werden unter Wasserstoff und $C_{1-4}$-Alkyl-, Hydroxy-, $C_{1-4}$-Alkoxygruppen, auspenommen Zimtsäureamid, zusammen mit einem Farbstoff enthält.

26. Mittel nach Anspruch 25, dadurch **gekennzeichnet**, daß die Verbindung der Formel (II) die ist, wie sie in einem der Ansprüche 9 bis 12 definiert worden ist.

27. Vogelabwehrmittel bzw. Vogelrepellens, dadurch **gekennzeichnet**, daß es mehr als eine Verbindung, ausgewählt unter

(a) 3,5-Dimethoxyzimtsäure und ihren Carboxylatsalzen und Carbonsäureesten,
(b) 3,5-Dimethoxyzimtsäureamid,
(c) 3,4,5-Trimethoxyzimtsäureamid und
(d) Zimtsäureamid, enthält.

28. Vogelabwehrmittel bzw. Vogelrepellens, dadurch **gekennzeichnet**, daß es mehr als eine Verbindung, ausgewählt unter

(a) 3,5-Dimethoxyzimtsäureamid,
(b) 3,4,5-Trimethoxyzimtsäureamid und
(c) Zimtsäureamid, enthält.

## Revendications

1. Utilisation en tant que produit de dissuasion vis-à-vis des oiseaux, d'un ou de plusieurs composés choisis parmi (a) un composé de la formule (I) :

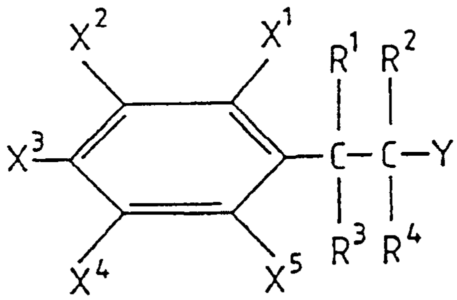

(I)

dans laquelle $X^1$ et $X^5$ sont chacun séparément de l'hydrogène ou un groupe alcoyle à 1 à 4 atomes de carbone, un groupe halogéno alcoyle ou un groupe alcoyle substitué par un halogène à 1 à 4 atomes de carbone ; $X^2$, $X^3$ et $X^4$ sont chacun séparément de l'hydrogène, un groupe alcoyle à 1 à 4 atomes de carbone, un groupe hydroxy, un groupe alcoxy à 1 à 4 atomes de carbone ou un groupe phénoxy ; $R^1$ et $R^2$ sont chacun séparément de l'hydrogène ou un groupe alcoyle à 1 à 4 atomes de carbone ; $R^3$ et $R^4$ sont chacun de l'hydrogène ou constituent ensemble la deuxième liaison d'une double liaison carbone-carbone reliant $-CR^1R^3-$ et $-CR^2R^4-$ ; et Y est un groupe carbamoyle ou un groupe carbamoyle substitué en N par un ou deux groupes alcoyle à 1 à 4 atomes de carbone, identiques ou différents, et (b) un composé constitué par l'acide 3,5-diméthoxycinnamique, ou un ester carboxylique ou un carboxylate de cet acide.

2. Utilisation en tant que produit de dissuasion vis-à-vis des oiseaux d'un composé de la formule (I), comme défini dans la revendication 1.

3. Utilisation comme produit de dissuasion vis-à-vis des oiseaux du composé, acide 3,5-diméthoxycinnamique.

4. Utilisation selon la revendication 1 ou la revendication 2, dans laquelle $X^1$ et $X^5$ sont chacun séparément de l'hydrogène ou un groupe alcoyle à 1 à 4 atomes de carbone.

5. Utilisation selon l'une des revendications 1, 2 ou 4, dans laquelle $X^2$, $X^3$ et $X^4$ sont chacun séparément de l'hydrogène, un groupe alcoyle à 1 à 4 atomes de carbone ou un groupe alcoxy à 1 à 4 atomes de carbone.

6. Utilisation selon l'une des revendications 1, 2, 4 ou 5, dans laquelle $R^1$ et $R^2$ sont chacun de l'hydrogène et $R^3$ et $R^4$ constituent ensemble la deuxième liaison d'une double liaison carbone-carbone.

7. Utilisation selon l'une des revendications 1, 2 et 4 à 6, dans laquelle Y est un groupe carbamoyle.

8. Utilisation comme produit de dissuasion vis-à-vis des oiseaux d'un composé de la formule (II) :

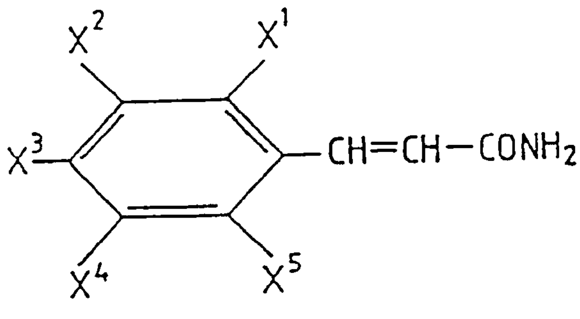

(II)

dans laquelle $X^1$ et $X^5$ sont chacun séparément de l'hydrogène ou un groupe alcoyle à 1 à 4 atomes de carbone; et $X^2$, $X^3$ et $X^4$ sont chacun séparément de l'hydrogène, un groupe alcoyle à 1 à 4 atomes de carbone, un groupe hydroxy ou un groupe alcoxy à 1 à 4 atomes de carbone.

9. Utilisation selon l'une des revendications 1, 2 et 4 à 8, dans laquelle $X^1$ et $X^5$ sont chacun de l'hydrogène.

10. Utilisation selon l'une des revendications 1, 2 et 4 à 9, dans laquelle $X^2$ et $X^4$ sont chacun séparément un groupe alcoxy à 1 à 4 atomes de carbone.

11. Utilisation selon la revendication 10, dans laquelle $X^2$ et $X^4$ sont chacun un groupe méthoxy.

12. Utilisation selon la revendication 11, dans laquelle le composé est le 3,5-diméthoxycinnamamide.

13. Utilisation comme produit de dissuasion vis-à-vis des oiseaux du cinnamamide.

14. Utilisation combinée, en tant que produit de dissuasion vis-à-vis des oiseaux, de deux ou plusieurs des composés suivants :

(a) acide 3,5-diméthoxycinnamique, ses carboxylates et ses esters carboxyliques,
(b) 3,5-diméthoxycinnamamide,
(c) 3,4,5-triméthoxycinnamamide, et

(d) cinnamamide.

15. Utilisation selon l'une des revendications 1 à 14, dans laquelle le composé est utilisé en combinaison avec un agent colorant.

16. Procédé qui consiste à traiter un végétal, qui est à l'état d'embryon, de culture en croissance ou de culture récoltée, avec un ou plusieurs composés choisis parmi (a) un composé de la formule (I) :

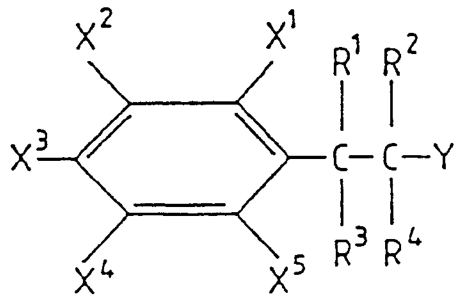

(I)

dans laquelle $X^1$ et $X^5$ sont chacun séparément de l'hydrogène et un groupe alcoyle à 1 à 4 atomes de carbone; $X^2$, $X^3$ et $X^4$ sont chacun séparément de l'hydrogène, un groupe alcoyle à 1 à 4 atomes de carbone, un groupe hydroxy, un groupe alcoxy à 1 à 4 atomes de carbone ou un groupe phénoxy ; $R^1$ et $R^2$ sont chacun séparément de l'hydrogène ou un groupe alcoyle à 1 à 4 atomes de carbone ; $R^3$ et $R^4$ sont chacun de l'hydrogène ou constituent ensemble la deuxième liaison d'une double liaison carbone-carbone reliant $-CR^1R^3-$ et $-CR^2R^4-$ ; et Y est un groupe carbamoyle ou un groupe carbamoyle substitué en N par un ou deux groupes alcoyle à 1 à 4 atomes de carbone, identiques ou différents, et (b) un composé qui est l'acide 3,5-diméthoxycinnamique, ou un ester carboxylique ou un carboxylate de cet acide.

17. Procédé pour lutter contre les dommages provoqués par les oiseaux, qui consiste à exposer aux oiseaux un végétal qui est à l'état embryonnaire, une récolte en croissance ou récoltée, ce végétal ayant été traité avec un ou plusieurs composés choisis parmi (a) un composé de la formule (I) :

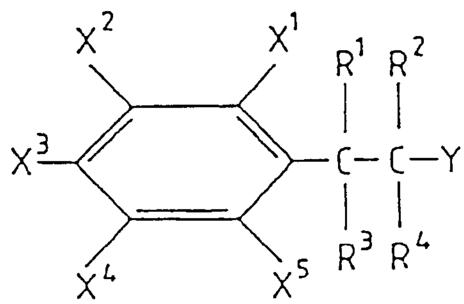

(I)

dans laquelle $X^1$ et $X^5$ sont chacun séparément de l'hydrogène ou un groupe alcoyle à 1 à 4 atomes de carbone; $X^2$, $X^3$ et $X^4$ sont chacun séparément de l'hydrogène, un groupe alcoyle à 1 à 4 atomes de carbone, un groupe hydroxy, un groupe alcoxy à 1 à 4 atomes de carbone ou un groupe phénoxy ; $R^1$ et $R^2$ sont chacun séparément de l'hydrogène ou un groupe alcoyle à 1 à 4 atomes de carbone ; $R^3$ et $R^4$ sont chacun de l'hydrogène ou constituent ensemble la deuxième liaison d'une double liaison carbone-carbone reliant $-CR^1R^3-$ et $-CR^2R^4-$ ; et Y est un groupe carbamoyle ou un groupe carbamoyle substitué en N par un ou deux groupes alcoyle à 1 à 4 atomes de carbone, identiques ou différents, et (b) un composé qui est l'acide 3,5-diméthoxycinnamique, ou un ester carboxylique ou un carboxylate de cet acide.

18. Procédé selon la revendication 16 ou la revendication 17, qui utilise un composé comme défini dans l'une des revendications 2 à 14.

19. Utilisation selon l'une des revendications 1 à 15, qui sert à repousser les oiseaux d'un végétal, qui est une récolte à l'état embryonnaire, en croissance ou récoltée.

20. Procédé selon l'une des revendications 16, 17 ou 18, ou l'utilisation selon la revendication 19, dans laquelle le végétal est un fruit.

21. Procédé selon l'une des revendications 16, 17 ou 18, ou utilisation selon la revendication 19, dans laquelle le végétal est constitué par des graines.

22. Utilisation selon l'une des revendications 1 à 15 et 19 à 21, ou procédé selon l'une des revendications 16 à 18, 20 et 21, dans laquelle les oiseaux sont des pigeons, des bouvreuils, des étourneaux ou des moineaux.

23. Utilisation ou procédé selon la revendication 22, dans lequel les oiseaux sont des pigeons.

24. Composition contenant de l'acide 3,5-diméthoxycinnamique ou un carboxylate ou un ester carboxylique de cet acide en combinaison avec un agent colorant.

25. Composition contenant un composé de la formule (II) :

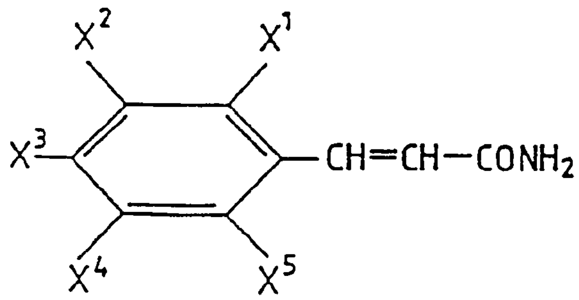

(II)

dans laquelle $X^1$ et $X^5$ sont chacun séparément de l'hydrogène ou un groupe alcoyle à 1 à 4 atomes de carbone; et $X^2$, $X^3$ et $X^4$ sont chacun séparément de l'hydrogène, un groupe alcoyle à 1 à 4 atomes de carbone, un groupe hydroxy ou un groupe alcoxy à 1 à 4 atomes de carbone, à l'exclusion du cinnamamide, ensemble avec un agent colorant.

26. Composition selon la revendication 25, dans laquelle le composé de la formule (II) est comme défini dans l'une des revendications 9 à 12.

27. Composition de dissuasion vis-à-vis des oiseaux contenant plus d'un composé choisi parmi

(a) l'acide 3,5-diméthoxycinnamique et ses carboxylates et ses esters carboxyliques,

(b) 3,5-diméthoxycinnamamide,

(c) 3,4,5-triméthoxycinnamamide et

(d) cinnamamide.

28. Composition de dissuasion vis-à-vis des oiseaux contenant plus d'un composé choisi parmi (a) 3,5-diméthoxycinnamamide, (b) 3,4,5-triméthoxycinnamamide et (c) cinnamamide.

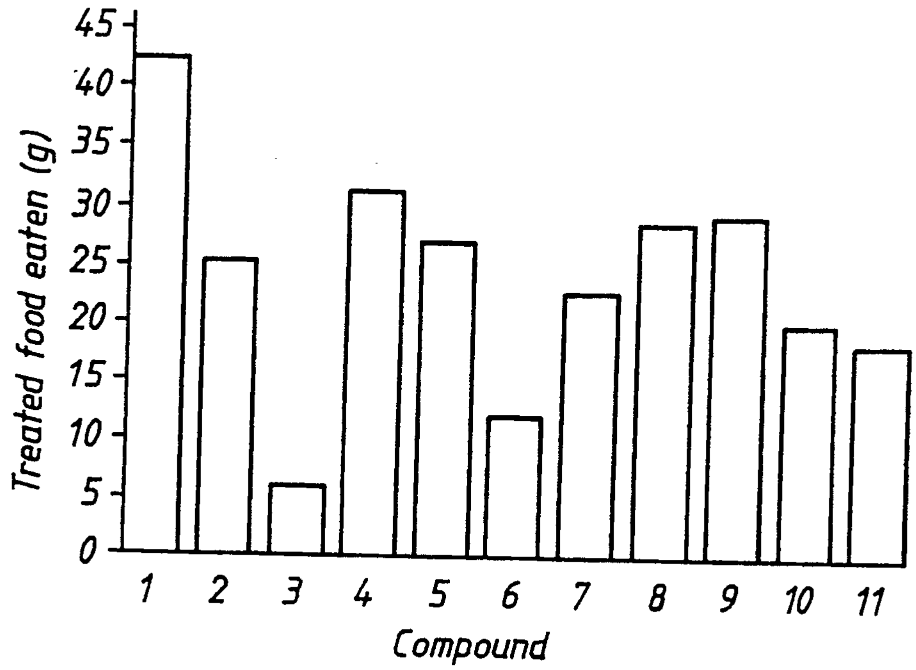
45
40
35
30
25
20
15
10
5
0
Treated food eaten (g)
1
2
3
4
5
6
7
8
9
10
11
Compound

Figure